## Europäisches Patentamt

## European Patent Office

## Office européen des brevets

(19)

(11) Veröffentlichungsnummer: **0 198 197 B1**

(12)

# EUROPÄISCHE PATENTSCHRIFT

(45) Veröffentlichungstag der Patentschrift:
25.07.90

(51) Int. Cl.⁵: **G01F 1/46**

(21) Anmeldenummer: **86102924.7**

(22) Anmeldetag: **05.03.86**

(54) **Differentialdruckströmungssonde.**

(30) Priorität: **11.04.85 DE 3512960**

(43) Veröffentlichungstag der Anmeldung:
**22.10.86 Patentblatt 86/43**

(45) Bekanntmachung des Hinweises auf die Patenterteilung:
**25.07.90 Patentblatt 90/30**

(84) Benannte Vertragsstaaten:
**AT BE CH DE FR GB IT LI LU NL SE**

(56) Entgegenhaltungen:
**US-A- 1 508 017**
**US-A- 2 197 214**
**US-A- 4 154 100**

**TECHNISCHE RUNDSCHAU, Nr. 23, 7. Juni 1983,**
**Seiten 41,43; E. NIETH: "Durchflussmessung nach dem**
**Wirkdruckprinzip"**

(73) Patentinhaber: **Intra Automation GmbH Mess- und**
**Regelinstrumente, Otto-Hahn-Strasse 20,**
**D-4048 Grevenbroich 1(DE)**

(72) Erfinder: **Evers, Ernst, Jülicher Strasse 49,**
**D-4048 Grevenbroich 1(DE)**

(74) Vertreter: **Paul, Dieter-Alfred, Dipl.-Ing.,**
**Fichtestrasse 18, D-4040 Neuss 1(DE)**

**Beschreibung**

Die Erfindung betrifft eine Differentialdruckströmungssonde nach den Merkmalen der Oberbegriffe der Ansprüche 1 und 2.

In der US-A-35 81 565 ist eine Differentialdruckströmungssonde beschrieben, die ein Staurohr mit über seine Länge symmetrisch verteilten frontseitigen Stauöffnungen zur Erfassung des sich aus der Addition von statischem und dynamischem Druck ergebenden Gesamtdruck in der Fluidströmung aufweist. An der Rückseite des Staurohrs, und zwar mittig, ist eine stromabwärts gerichtete Sondenöffnung für die Erfassung des statischen Druckes vorgesehen. Das Staurohr und die Sondenöffnung sind über Rohrleitungen mit einem Meßgerät verbunden, das eine Differenzbildung zwischen beiden abgegriffenen Druckwerten bewirkt und so den dynamischen Druck in der Fluidströmung ermittelt. Dieser ist bekanntlich proportional zum Quadrat der Geschwindigkeit der Fluidströmung und damit der Durchflußmenge in der Rohrleitung.

Die Anordnung der Sondenöffnung für die Erfassung des statischen Druckes im Nachströmgebiet des Staurohrs hat den Vorteil, daß sich die Sondenöffnung im Sog des Staurohrs und damit in einem Gebiet befindet, in dem ein gegenüber dem Druck in der freien Strömung erheblich niedrigerer statischer Druck herrscht. Der angezeigte Differenzdruck ist dann größer, was für eine genauere Anzeige erwünscht ist.

Die vorbeschriebene Differentialdruckströmungssonde hat einen runden Querschnitt. Die Nachteile einer solchen Ausbildung sind in der DE-A-28 42 676 ausführlich beschrieben. Sie bestehen im wesentlichen darin, daß der Strömungsabriß am Mantel des Staurohrs bei rundem Querschnitt in Abhängigkeit von der Strömungsgeschwindigkeit an unterschiedlichen Stellen erfolgt.

Dieses Phänomen ist schon seit Beginn der Jahrhundertwende bekannt. Es hat zur Folge, daß sich der Strömungswiderstand des Staurohrs in Abhängigkeit von der Strömungsgeschwindigkeit ändert. Dies wiederum bewirkt einen nicht linearen Zusammenhang zwischen Differenzdruck und dem Quadrat der Geschwindigkeit bzw. Durchflußmenge und damit Meßwertverfälschungen.

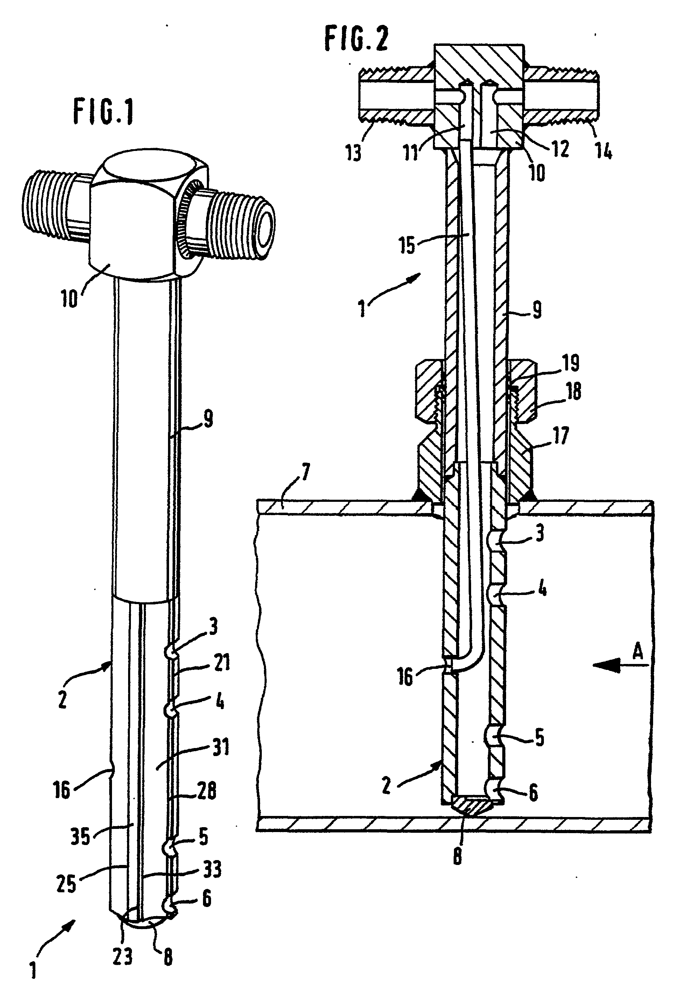

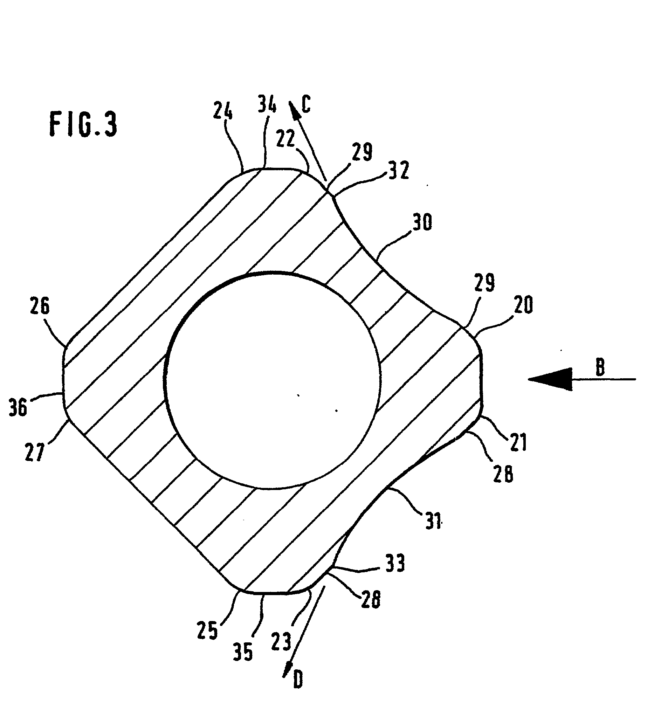

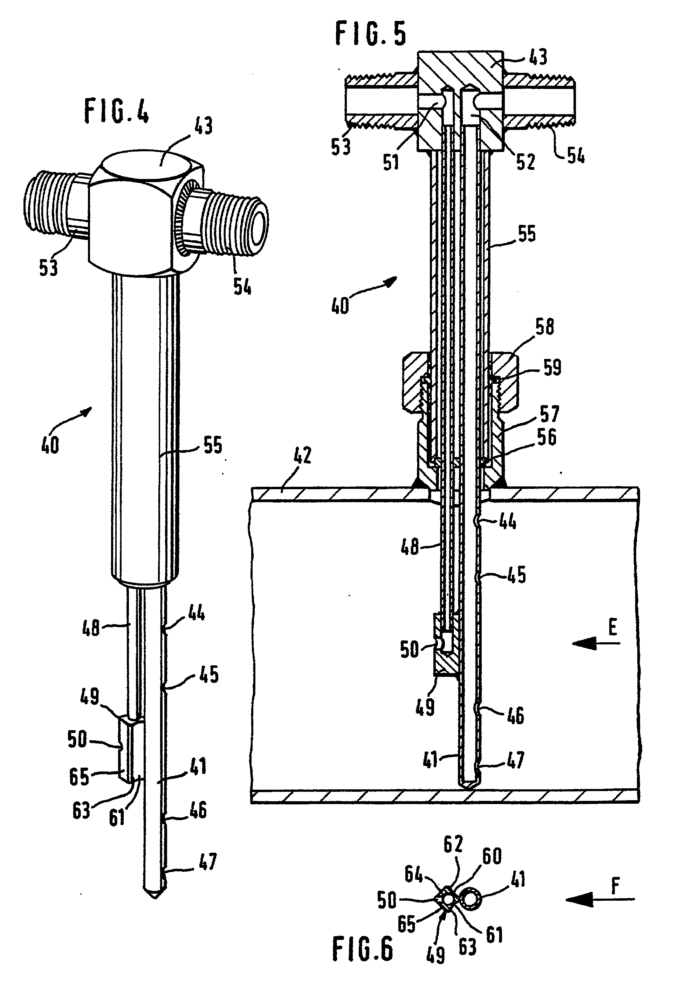

Um dem abzuhelfen, werden in der DE-A-28 42 676 verschiedene Vorschläge für die Gestaltung der Stausonde bzw. eines die Sondenöffnung enthaltenden Körpers vorgeschlagen. Allen Ausführungsformen ist gemeinsam, daß die äußeren Begrenzungen der Frontflächen des Staurohrs (Figuren 1 bis 6) bzw. des zusätzlichen Körpers (Figuren 7 bis 9) jeweils in einer Kante auslaufen, die so scharfkantig ausgebildet sind, daß an ihnen die auf die Frontflächen auftreffende und sich an sie anlegende Strömungsgrenzschicht abreißt. Die seitlichen und rückwärtigen Flächen sind dabei so gestaltet, daß die Strömung nach dem Abreißen nicht mehr wieder zur Anlage kommt, so daß - jedenfalls theoretisch - der Strömungsabriß unabhängig von der Strömungsgeschwindigkeit immer an der gleichen Stelle erfolgt.

Als Querschnittsformen werden zum einen eine Dreieckgestaltung vorgeschlagen, deren Frontseite quer zur Strömungsrichtung verläuft. Diese Ausführungsform ist nachteilig, weil die Strömungsaufteilung ungenau und unstabil ist und weil der innen für die Rohrleitungen zur Verfügung stehende Raum relativ gering ist. Insoweit günstiger sind im wesentlichen quadratische Querschnitte, wie sie in den Figuren (1), (3), (4) und (6) der DE-A-28 42 676 dargestellt sind. Im eingebauten Zustand sind sie so ausgerichtet, daß eine der Diagonalen parallel zur Rohrmittenachse verläuft, der auftreffende Fluidstrom also von den keilförmig sich verbreiternden Frontflächen sauber aufgeteilt wird.

Auf den Seiten 8 unten und 9 oben der DE-A-28 42 676 werden beiläufig noch konkave, divergent gekrümmte und stromaufwärts gerichtete Auftreffflächen erwähnt. Es bleibt jedoch offen, wie diese Flächen im einzelnen aussehen und vor allem wie sie gegenüber der auftreffenden Strömung ausgerichtet sein sollen. Sie werden auch damit abgetan, daß sie gegenüber planaren Flächen keine Vorteile bringen und zudem eine komplizierte Herstellung erfordern würden, insgesamt also gegenüber den in den Zeichnungen dargestellten Querschnittsformen nachteilig seien.

Als für die Herstellung besonders günstig hat sich das Profil gemäß den Figuren (1) und (4) in der DE-A-28 42 676 erwiesen. Dieses Profil für das Staurohr unterscheidet sich von einem streng quadratischen dadurch, daß die Längskanten so stark abgefast sind, daß sich zwei parallele Seitenflächen und parallele Front- und Rückflächen bilden, die aus dem ursprünglichen quadratischen Profil, wie es in den Figuren (3) und (6) der DE-A-28 42 676 gezeigt ist, ein Achteck machen. Ein solcher Querschnitt kann auf einfache Weise gezogen oder gestoßen werden. Spanabhebende Bearbeitung ist dann nur noch für die Bohrungen der Stau- und Sondenöffnungen notwendig.

Allerdings gelingt es bei diesen Herstellungsverfahren nicht, die Längskanten des Staurohrs genügend scharfkantig auszubilden, damit die auf die keilförmigen Frontflächen auftreffende Strömung im Bereich der Außenkanten der Frontflächen immer an der gleichen Stelle abreißt. Die Folge ist, daß keine genaue Proportionalität zwischen dem Differenzdruck und dem Quadrat der Durchflußmenge erreichbar ist, der Korrekturfaktor des Widerstandswertes also in Abhängigkeit von der Strömungsgeschwindigkeit schwankt. Man hat dem dadurch zu begegnen versucht, daß die Frontflächen durch spanabhebende Bearbeitung nachbearbeitet wurden, um die Kanten anzuschärfen. Das Ergebnis ist jedoch immer noch nicht befriedigend.

Der Erfindung liegt die Aufgabe zugrunde, eine Differentialdruckströmungssonde der eingangs genannten Art so weiterzuentwickeln, daß sie trotz relativ einfacher und kostengünstiger Herstellung sehr gute Meßwerte liefert.

Diese Aufgabe wird erfindungsgemäß dadurch gelöst, daß in die Frontflächen - im Querschnitt gesehen - mit Abstand sowohl zu deren hinten liegenden Begrenzungen als auch zur Frontspitze bzw. Front bogenförmige und das Fluid nach außen ablenkende Einbuchtungen eingeformt sind, deren hinten liegende Begrenzungskanten als die Abreißkanten ausgebildet sind, wobei sich die Einbuchtungen - im Querschnitt gesehen - über maximal 80% der keilförmigen Abschnitte der Frontflächen erstrecken.

Diese Ausbildung beruht auf der schon zur Erfindung gehörenden Erkenntnis, daß keilförmige Frontflächen für die saubere Aufteilung des Fluidstromes und für geringe Widerstandswerte zwar günstig sind, nicht aber für die Bildung der Abreißkanten an ihren äußeren Begrenzungen, insbesondere wenn das Staurohr kostengünstig in einem Ziehprozeß hergestellt wird. Mit Hilfe der zusätzlich eingeformten bogenförmigen Einbuchtungen wird nun der auf die Frontflächen auftreffende Fluidstrom stärker nach außen umgelenkt als der Keilwinkel der Frontflächen, was einen saubereren Strömungsabriß an den hinten liegenden Begrenzungskanten der Einbuchtungen zur Folge hat. Dabei verhindert die stetige Richtungsänderung innerhalb der Einbuchtungen ein vorzeitiges Ablösen und gibt der Strömung offenbar einen solch starken Drall nach außen, daß es sich als unschädlich erwiesen hat, wenn die Frontflächen sich im Anschluß an die Abreißkanten der Einbuchtungen noch ein wenig fortsetzen. Eine Wiederanlage der Strömung tritt nicht ein.

Der Einformung solcher Einbuchtungen stand zwar der Umstand entgegen, daß der Materialquerschnitt des Profils gerade in diesem Bereich sehr gering ist, solche Sonden aber festigkeitsmäßig insbesondere beim Einsatz in Rohren großer Innendurchmesser nicht unerheblich beansprucht werden. Dem wurde dadurch Rechnung getragen, daß erfindungsgemäß die Einbuchtungen in ihrer Erstreckung nicht über die gesamten Frontflächen gehen, sondern so klein gehalten werden, daß sich die Verringerung des Materialquerschnittes und damit der Festigkeitsverlust in geringen Grenzen hält und durch andere Maßnahmen ohne Probleme ausgeglichen werden kann. Überraschend war allerdings im Hinblick auf die gegenteiligen Ausführungen in der DE-A-28 42 676, daß durch diese Begrenzungen keine Nachteile entstanden. Offenbar ist der durch die Einbuchtungen aufgeprägte Drall - wie schon oben dargelegt - so stark, daß eine Fortsetzung der Frontflächen im Anschluß an die Abreißkanten der Einbuchtungen unschädlich ist.

Als besonderer Vorteil dieser Maßnahme erwies sich die Tatsache, daß diese Gestaltung der Frontseiten problemlos in einem Ziehprozeß hergestellt werden kann, ohne daß es einer Nachbearbeitung bedarf. Die damit erreichbare, begrenzte Kantenschärfe wird offenbar durch den von der Bogenform der Einbuchtungen aufgeprägten Drall so weit kompensiert, daß der Abriß immer an derselben Stelle erfolgt, was sich in einem über einen sehr großen Geschwindigkeitsbereich konstanten Korrekturwert ausdrückt. Die Meßwertgenauigkeit wird also durch die Erfindung verbessert.

Besonders unerwartet und deshalb überraschend ist das Verhalten der erfindungsgemäßen Differentialdruckströmungssonde in zwei weiteren Aspekten. Bekanntlich sind sehr tieffrequente Meßwertschwankungen um den tatsächlichen Differenzdruckwert für solche Sonden charakteristisch. Dies erschwert das Ablesen des korrekten Differenzdruckwertes erheblich. Messungen mit der erfindungsgemäß ausgebildeten Differentialdruckströmungssonde ergaben eine starke Verringerung solcher Meßwertschwankungen mit entsprechend verbesserter Ablesegenauigkeit. Ebenfalls überraschend war die Tatsache, daß der Differenzdruck insbesondere bei niedrigen Rohrdurchmessern erheblich vergrößert wird, was ebenfalls eine Verbesserung der Ablesegenauigkeit bewirkt. Offenbar ist die Ablenkung durch die Einbuchtungen derart verstärkt, daß das Nachströmungsgebiet einen besonders niedrigen, statischen Druck im Vergleich zur freien Strömung hat.

Insgesamt ist damit eine Formgebung für die Differentialdruckströmungssonde gefunden, die sich trotz einfacher und damit kostengünstiger Herstellbarkeit durch verbessertes Meßwertverhalten auszeichnet.

Bei der konkreten Ausbildung und Anordnung der Einbuchtungen innerhalb der Frontflächen sollte darauf geachtet werden, daß die Einbuchtungen an den vorn liegenden Begrenzungskanten möglichst günstig angeströmt werden und daß sie an den hinten liegenden Begrenzungskanten derart auslaufen, daß die Strömung eine gegenüber den Frontflächen nach außen gerichteten Drall erhält und sich somit nicht mehr an diese anlegen kann. In Versuchen wurden folgende, günstige Werte hierfür ermittelt. Die Frontflächen sollten in an sich bekannter Weise einen Winkel von etwa 90° einschließen. Dies stellt einerseits günstige Materialquerschnitte für die Einformung der Einbuchtungen zur Verfügung und läßt andererseits eine ausgeprägte Gestaltung der Abreißkanten zu.

Die Tangenten an die vorn liegenden Begrenzungskanten der Einbuchtungen sollten einen Winkel von 0° bis 60° einschließen. Als besonders vorteilhaft haben sich Winkelwerte zwischen mindestens 20° und höchstens 40° erwiesen.

Was die Tangenten an die hinten liegenden Begrenzungskanten der Einbuchtungen angeht, ist hier ein Bereich von 100° bis 180° als eingeschlossener Winkel vorzuziehen. Als besonders geeignet haben sich Winkel zwischen zumindest 130° und höchstens 160° erwiesen. Dabei sollte der Winkel zwischen den Tangenten an die hinten liegenden Begrenzungskanten der Einbuchtungen und der jeweils anschließenden Frontflächenbereiche zumindest 20° betragen. Dieser Winkel sollte um so größer sein, je mehr sich die Frontfläche im Anschluß an die hinten liegenden Begrenzungskanten der Einbuchtungen fortsetzt.

In weiterer Ausbildung der Erfindung ist vorgesehen, daß sich die Einbuchtungen jeweils über wenigstens 60° der keilförmigen Abschnitte der Frontflächen erstrecken.

Die Erfindung sieht schließlich vor, daß der die Sondenöffnung(en) aufweisende Körper aus einem gestoßenen oder gezogenen Abschnitt besteht.

In der Zeichnung ist die Erfindung an Hand von zwei Ausführungsbeispielen näher veranschaulicht. Es zeigen:

Figur (1) eine Differentialdruckströmungssonde in der Ansicht;

Figur (2) die Differentialdruckströmungssonde gemäß Figur (1) im Längsschnitt durch einen Rohrabschnitt;

Figur (3) einen Querschnitt durch das Staurohr der Differentialdruckströmungssonde gemäß den Figuren (1) und (2);

Figur (4) eine andere Differentialdruckströmungssonde;

Figur (5) die Differentialdruckströmungssonde gemäß Figur (4) in einem Längsschnitt durch einen Rohrabschnitt;

Figur (6) einen Querschnitt durch das Staurohr der Differentialdruckströmungssonde gemäß den den Figuren (4) und (5).

Die in den Figuren (1) und (2) dargestellte Differentialdruckströmungssonde (1) weist ein Staurohr (2) auf, das auf der einen Seite vier Stauöffnungen (3, 4, 5, 6) aufweist. Wenn die Differentialdruckströmungssonde (1) - wie in Figur (2) gezeigt - in einen Rohrabschnitt (7) eingebaut ist, befinden sich die Stauöffnungen (3, 4, 5, 6) symmetrisch zur Rohrmittelachse und gegen den Fluidstrom, angedeutet durch den Pfeil A, gerichtet.

Das in dieser Ansicht untere Ende des Staurohrs (2) ist durch eine Kappe (8) verschlossen. Diese Kappe (8) liegt an der Innenwandung des Rohrabschnittes (7) mit einer Spitze an. An das obere offene Ende des Staurohrs (2) ist ein Anschlußrohr (9) koaxial angeschweißt. Es ist obenseitig durch ein Kopfstück (10) abgeschlossen, durch das zwei Verbindungsbohrungen (11, 12) gehen, die jeweils in einen seitlich weggehenden Schraubstutzen (13, 14) münden. An diese Schraubstutzen (13, 14) kann ein Meßgerät zur Messung des Differenzdruckes angeschlossen werden.

Die in dieser Ansicht linke Verbindungsbohrung (11) ist über ein durch das Anschlußrohr (9) und bis zur Mitte des Staurohrs (2) gehendes Röhrchen (15) mit einer Sondenöffnung (16) an der Rückseite des Staurohrs (2) verbunden, und zwar so, daß die Sondenöffnung (16) keine Verbindung zum Innenraum des Staurohrs (2) hat. Über diese Sondenöffnung (16) wird somit der statische Druck der Fluidströmung erfaßt, während im Innenraum des Staurohrs (2) und des Rohrabschnitts (7) der dynamische Druck der Fluidströmung herrscht. Die Differenz zwischen den beiden Druckwerten ist dann proportional zum Quadrat der Durchflußmenge.

Die Differentialdruckströmungssonde (1) ist innerhalb eines Rohrstutzens (17) eingesetzt, der an dem Rohrabschnitt (7) angeschweißt ist. Eine Überwurfmutter (18) ist auf den Rohrstutzen (17) aufgeschraubt und klemmt dabei einen Dichtungsring (19) derart ein, daß hierdurch gleichzeitig die Differentialdruckströmungssonde (1) fixiert wird.

Die erfindungsgemäße Besonderheit der Differentialdruckströmungssonde (1) ergibt sich insbesondere aus Figur (3). Das dort im Querschnitt dargestellte Staurohr (2) ist aus einem in seiner Grundform achteckigen Rohrabschnitt hergestellt, so daß entsprechend acht Längskanten (20, 21, 22, 23, 24, 25, 26, 27) gebildet werden. Da dieser Rohrabschnitt in einem Ziehvorgang hergestellt wurde, sind diese Längskanten (20 bis 27) nicht scharf ausgebildet, sondern abgerundet. Hierdurch konnte kein sauberer Strömungsabriß im Bereich der äußeren Längskanten (22, 23) der Frontflächen (28, 29) erreicht werden.

Um einen solchen Abriß dennoch zu erreichen, sind in die Frontflächen (28, 29) bogenförmige Einbuchtungen (30, 31) eingeformt, und zwar in der Weise, daß die äußeren Begrenzungen der Einbuchtungen (30, 31) als Abreißkanten (32, 33) ausgebildet sind. Die wie Schaufeln wirkenden Einbuchtungen (30, 31) lenken den auf das Staurohr (2) auftreffenden Fluidstrom, angedeutet durch den Pfeil B, ausgeprägt und ohne die Möglichkeit einer vorzeitigen Ablösung nach außen um, so daß der Fluidstrom an den Abreißkanten (32, 33) in Richtung der Pfeile C und D abströmt und dabei sauber abreißt. Es hat sich gezeigt, daß die Umlenkung so ausgeprägt ist, daß es ohne Einfluß ist, daß sich die Frontflächen (28, 29) im Anschluß an die Abreißkanten (32, 33) noch weiter sich verbreiternd fortsetzen, bis sie in parallele Seitenflächen (34, 35) übergehen. Im Anschluß an die Seitenflächen (34, 35) verjüngt sich der Querschnitt des Staurohrs (2) bis auf eine rückseitige Fläche (36), in der - hier nicht sichtbar - die Sondenöffnung (16) eingeformt ist. Entsprechend befinden sich die Stauöffnungen (3, 4, 5, 6) - hier ebenfalls nicht sichtbar - auf der gegenüberliegenden Seite des Staurohrs (2), dem Pfeil B entgegengerichtet.

Die in den Figuren (4) und (5) dargestellte Differentialdruckströmungssonde (40) weist ein durchgehendes Staurohr (41) auf, dessen unteres Ende an der Innenwandung eines Rohrabschnittes (42) anliegt und dessen oberes Ende in ein Kopfstück (43) mündet. Das Staurohr (41) weist ebenfalls insgesamt vier Stauöffnungen (44, 45, 46, 47) auf, die paarweise symmetrisch zur Längsachse des Rohrabschnittes (42) stehen, wenn die Differentialdruckströmungssonde (40), wie in Figur (5) dargestellt, in den Rohrabschnitt (42) eingebaut ist.

Von dem Kopfstück (43) geht ein Sondenrohr (48) aus, das untenseitig in einen Sondenkörper (49) mündet und dort Verbindung zu einer stromabwärts gerichteten Sondenöffnung (50) hat. Der Sondenkörper (49) ist mit seiner Vorderseite an der Rückseite des Staurohrs (41) angeschweißt.

Durch das Kopfstück (43) gehen zwei Verbindungsbohrungen (51, 52), die jeweils in einen seitlich weggehenden Schraubstutzen (53, 54) münden. An diese Schraubstutzen (53, 54) kann ein Meßgerät zur Erfassung des Differenzdruckes angeschlossen werden. Unterhalb des Kopfstückes (43) bis etwas oberhalb des Rohrabschnittes (42) sind Staurohr (41) und Sondenrohr (48) von einem Mantelrohr (55) umgeben, wobei das untere Ende des Mantelrohrs (55) mit einer angeschweißten Platte (56) abgeschlossen ist.

Die Differentialdruckströmungssonde (40) ist mit dem Mantelrohr (55) innerhalb eines an den Rohrabschnitt (42) angeschweißten Rohrstutzen (57) eingesetzt. Eine Überwurfmutter (58) ist auf den Rohrstutzen (57) aufgeschraubt und klemmt dabei einen Dichtungsring (59) derart ein, daß hierdurch gleichzeitig die Differentialdruckströmungssonde (40) fixiert wird.

Die erfindungsgemäße Besonderheit der Differentialdruckströmungssonde (40) ergibt sich insbesondere aus Figur (6). Sie ist ein Querschnitt durch das Staurohr (41) und den Sondenkörper (49) zwischen unterem Ende des Sondenrohrs (48) und der Sondenöffnung (50). Der Sondenkörper (49) weist frontseitig je eine bogenförmige Einbuchtung (60, 61) auf, und zwar in der Weise, daß die äußeren Begrenzungen der Einbuchtungen (60, 61) Abreißkanten (62, 63) bilden. Die wie Schaufeln wirkenden Einbuchtungen (60, 61) lenken den auf den Sondenkörper (49) auftreffenden Fluidstrom ohne die Möglichkeit einer vorzeitigen Ablösung nach außen um, so daß der Fluidstrom an den Abreißkanten (62, 63) abströmt und dabei sauber abreißt. Es hat sich gezeigt, daß die Umlenkung so ausgeprägt ist, daß es ohne Einfluß ist, daß sich die Frontflächen im Anschluß an die Abreißkanten (62, 63) - was hier nicht deutlich sichtbar wird - noch weiter sich verbreiternd fortsetzen, bis sie in parallele Seitenflächen übergehen. Die rückseitigen Flächen (64, 65) laufen nach hinten spitz zu, wobei in sie die Sondenöffnung (50) eingeformt ist.

Die Pfeile E und F bezeichnen jeweils die Strömungsrichtung des Fluidstroms.

Der Sondenkörper (49) kann aus einem gezogenen Materialstück abgeschnitten, aber auch durch spanabhebende Bearbeitung hergestellt sein.

## Patentansprüche

1. Differentialdruckströmungssonde (1) zum Messen des Differenzdruckes einer Fluidströmung in einer Rohrleitung (7) mit einem als Hohlrohr ausgebildeten, langgestreckten Staurohr (2), das frontseitig zumindest eine Stauöffnung (3, 4, 5, 6) aufweist, und mit einer Sonde (15) für den statischen Druck mit zumindest einer rückseitigen Sondenöffnung (16), wobei die Sondenöffnung (16) im Abstrom des Staurohrs (2) liegt, das sich – im Querschnitt gesehen – von einer Frontspitze im wesentlichen keilförmig verbreiternde Frontflächen (28, 29) hat, die parallel zur Staurohrachse verlaufende Abreißkanten (32, 33) für den seitlichen Abriß der auftreffenden Fluidströmung aufweisen, so daß das Fluid ohne anschließende Wiederanlage am Staurohr (2) vorbeiströmt, dadurch gekennzeichnet, daß in die Frontflächen (28, 29) – im Querschnitt gesehen – mit Abstand sowohl zu deren hinten liegenden Begrenzung (22, 23) als auch zur Frontspitze bogenförmige und das Fluid nach außen ablenkende Einbuchtungen (30, 31) eingeformt sind, deren hinten liegende Begrenzungskanten als die Abreißkanten (32, 33) ausgebildet sind, wobei sich die Einbuchtungen (30, 31) – im Querschnitt gesehen – über maximal 80% der keilförmigen Abschnitte der Frontflächen (28, 29) erstrecken.

2. Differentialdruckströmungssonde (40) zum Messen des Differenzdruckes einer Fluidströmung in einer Rohrleitung (42) mit einem als Hohlrohr ausgebildeten, langgestreckten Staurohr (41), das frontseitig zumindest eine Stauöffnung (44, 45, 46, 47) aufweist, und mit einer Sonde (48) für den statischen Druck mit zumindest einer rückseitigen Sondenöffnung (50), wobei die Sondenöffnung (50) im Abstrom eines separaten Sondenkörpers (49) liegt, der sich von vorn gesehen im Querschnitt im wesentlichen keilförmig verbreiternde Fronfflächen hat, die parallell zur Staurohrachse verlaufende Abreißkanten (62, 63) für den seitlichen Abriß der auftreffenden Fluidströmung aufweisen, so daß das Fluid ohne anschließende Wiederanlage am Sondenkörper (49) vorbeiströmt, dadurch gekennzeichnet, daß in die Frontflächen – im Querschnitt gesehen – mit Abstand sowohl zu deren hinten liegenden Begrenzungen als auch zur Front des Sondenkörpers (49) bogenförmige und das Fluid nach außen ablenkende Einbuchtungen (60, 61) eingeformt sind, deren hinten liegende Begrenzungskanten als die Abreißkanten (62, 63) ausgebildet sind, wobei sich die Einbuchtungen (60, 61) über maximal 80% der keilförmigen Abschnitte der Frontflächen erstrecken.

3. Differentialdruckströmungssonde nach Anspruch 1 oder 2, dadurch gekennzeichnet, daß die Frontflächen (28, 29) einen Keilwinkel von ca. 90° einschließen.

4. Differentialdruckströmungssonde nach einem der Ansprüche 1 bis 3, dadurch gekennzeichnet, daß die Tangenten an die vorn liegenden Begrenzungskanten der Einbuchtungen (30, 31; 60, 61) einen Winkel von 0° bis 60° einschließen.

5. Differentialdruckströmungssonde nach Anspruch 4, dadurch gekennzeichnet, daß die Tangenten an die vorn liegenden Begrenzungskanten der Einbuchtungen (30, 31; 60, 61) einen Winkel von höchstens 40° einschließen.

6. Differentialdruckströmungssonde nach Anspruch 5, dadurch gekennzeichnet, daß die Tangenten an die vorn liegenden Begrenzungskanten der Einbuchtungen (30, 31; 60, 61) einen Winkel von zumindest 20° einschließen.

7. Differentialdruckströmungssonde nach einem der Ansprüche 1 bis 6, dadurch gekennzeichnet, daß die Tangenten an die hinten liegenden Begrenzungskanten (32, 33; 62, 63) der Einbuchtungen (30, 31; 60, 61) einen Winkel von 100° bis 180° einschließen.

8. Differentialdruckströmungssonde nach Anspruch 7, dadurch gekennzeichnet, daß die Tangenten an die hinten liegenden Begrenzungskanten (32, 33; 62, 63) der Einbuchtungen (30, 31; 60, 61) einen Winkel von zumindest 130° einschließen.

9. Differentialdruckströmungssonde nach Anspruch 7 oder 8, dadurch gekennzeichnet, daß die Tangenten an die hinten liegenden Begrenzungskanten (32, 33; 62, 63) der Einbuchtungen (30, 31; 60, 61) einen Winkel von höchstens 160° einschließen.

10. Differentialdruckströmungssonde nach einem der Ansprüche 1 bis 9, dadurch gekennzeichnet, daß der Winkel zwischen den Tangenten an die hinten liegenden Begrenzungskanten (32, 33; 62, 63) der Einbuchtungen (30, 31; 60, 61) und der jeweils anschließenden Frontflächenbereiche zumindest 20° beträgt.

11. Differentialdruckströmungssonde nach einem der Ansprüche 1 bis 10, dadurch gekennzeichnet, daß sich die Einbuchtungen (30, 31; 60, 61) — im Querschnitt gesehen — jeweils über mindestens 60% der keilförmigen Abschnitte der Frontflächen (28, 29) erstrecken.

12. Differentialdruckströmungssonde nach einem der Ansprüche 1 bis 11, dadurch gekennzeichnet, daß der die Sondenöffnung (16, 50) aufweisende Körper (2, 49) aus einem gestoßenen oder gezogenen Abschnitt besteht.

## Claims

1. Differential pressure fluid flow sensor (1) for measuring the differential pressure of a fluid flow in a conduit (7) with an elongated pressure tube (2) which is constructed as a hollow tube and at the front side has at least one baffle aperture (3, 4, 5, 6), and with a sensor (15) for the static pressure with at least one rear-side sensor aperture (16), the sensor aperture (16) being situated in the downstream flow from the pressure tube (2), this tube having - as seen in cross-section - front surfaces (28, 29) which widen in substantially wedge-shaped manner from a front point and which have detaching edges (32, 33), extending parallel to the pressure tube axis, for the lateral detaching of the impinging fluid flow, so that the fluid flows past the pressure tube (2) without subsequently re-applying itself thereto, characterised in that arcuate concavities (30, 31) deflecting the fluid outwards are formed in the front surfaces (28, 29) - as seen in cross-section - with spacing both from the rear boundaries (22, 23) thereof and also from the front point, the rear boundary edges of the said concavities being constructed as the detaching edges (32, 33), the concavities (30, 31) - as seen in cross-section - extending over at the maximum 80 % of the wedge-shaped portions of the front surfaces (28, 29).

2. Differential pressure fluid flow sensor (40) for the measuring of the differential pressure of a fluid flow in a conduit (42) with an elongated pressure tube (41) which is constructed as a hollow tube and has at the front side at least one baffle aperture (44, 45, 46, 47), and with a sensor (48) for the static pressure with at least one rear-side sensor aperture (50), the sensor aperture (50) being situated in the downstream flow from a separate sensor body (49), which seen from the front in cross-section has front surfaces which widen in substantially wedge-shaped manner and which have detaching edges (62, 63), disposed parallel to the pressure tube axis, for the lateral detaching of the impinging fluid flow, so that the fluid flows past the sensor body (49) without subsequently re-applying itself thereto, characterised in that arcuate concavities (60, 61) deflecting the fluid outwards are formed in the front surfaces - as seen in cross-section - with spacing both from the rear boundaries thereof and also from the front of the sensor body (49), the rear boundary edges of the said concavities being constructed as the detaching edges (62, 63), the concavities (60, 61) extending over at the maximum 80 % of the wedge-shaped portions of the front surfaces.

3. Differential pressure fluid flow sensor according to claim 1 or 2, characterised in that the front surfaces (28, 29) enclose a wedge angle of approximately 90°.

4. Differential pressure fluid flow sensor according to one of claims 1 to 3, characterised in that the tangents to the front boundary edges of the concavities (30, 31; 60, 61) enclose an angle of 0° to 60°.

5. Differential pressure fluid flow sensor according to claim 4, characterised in that the tangents to the front boundary edges of the concavities (30, 31; 60, 61) enclose an angle of at the most 40°.

6. Differential pressure fluid flow sensor according to claim 5, characterised in that the tangents to the front boundary edges of the concavities (30, 31; 60, 61) enclose an angle of at the most 20°.

7. Differential pressure fluid flow sensor according to one of claims 1 to 6, characterised in that the tangents to the rear boundary edges (32, 33; 62, 63) of the concavities (30, 31; 60, 61) enclose an angle of 100° to 180°.

8. Differential pressure fluid flow sensor according to claim 7, characterised in that the tangents to the rear boundary edges (32, 33; 62, 63) of the concavities (30, 31; 60, 61) enclose an angle of at least 130°.

9. Differential pressure fluid flow sensor according to claim 7 or 8, characterised in that the tangents to the rear boundary edges (32, 33; 62, 63) of the concavities (30, 31; 60, 61) enclose an angle of at the most 160°.

10. Differential pressure fluid flow sensor according to one of claims 1 to 9, characterised in that the angle between the tangents to the rear boundary edges (32, 33; 62, 63) of the concavities (30, 31; 60, 61) and the respective following front surface regions amounts to at least 20°.

11. Differential pressure fluid flow sensor according to one of claims 1 to 10, characterised in that the concavities (30, 31; 60, 61) - as seen in cross-section - extend in each case over at least 60 % of the wedge-shaped portions of the front surfaces (28, 29).

12. Differential pressure fluid flow sensor according to one of claims 1 to 11, characterised in that the body (2, 49) which comprises the sensor aperture (16, 50) is cut from a drawn or planed piece.

## Revendications

1. Capteur (1) de pression différentielle de débit pour mesurer la pression différentielle d'une circulation de fluide dans un conduit tubulaire (7), comprenant un tube longiligne d'accumulation (2) qui est réalisé sous la forme d'un tube creux et est percé, frontalement, d'au moins un orifice d'accumulation (3, 4, 5, 6), ainsi qu'une sonde (15) pour la pression statique, percée d'au moins un orifice postérieur (16), l'orifice (16) de la sonde étant situé dans le flux de sortie du tube d'accumulation (2) muni de surfaces frontales (28, 29) qui présentent, observées en coupe transversale, un évasement sensiblement cunéiforme à partir d'une pointe frontale, et comportent des arêtes de dissociation (32, 33), s'étendant parallèlement à l'axe du tube d'accumulation, en vue de la dissociation latérale de la circulation de fluide incidente, de sorte que le fluide circule en regard du tube d'accumulation (2), sans aucune entrée en contact ultérieure, caractérisé par le fait que des indentations en arc de cercle (30, 31) déviant le fluide vers l'extérieur sont ménagées dans les surfaces frontales (28, 29), à distance - observées en coupe transversale - tant de la pointe frontale que de la délimitation (22, 23) desdites surfaces, située à l'arrière, indentations dont les arêtes de délimitation situées à l'arrière sont réalisées sous la forme des arêtes de dissociation (32, 33), lesdites indentations (30, 31) s'étendant au maximum - observées en coupe transversale - sur 80 % des régions cunéiformes des surfaces frontales (28, 29).

2. Capteur (40) de pression différentielle de débit pour mesurer la pression différentielle d'une circulation de fluide dans un conduit tubulaire (42), comprenant un tube longiligne d'accumulation (41) qui est réalisé sous la forme d'un tube creux et est percé, frontalement, d'au moins un orifice d'accumulation (44, 45, 46, 47), ainsi qu'une sonde (48) pour la pression statique, percée d'au moins un orifice postérieur (50), l'orifice (50) de la sonde étant situé dans le flux de sortie d'un corps de sonde distinct (49) muni de surfaces frontales qui présentent un évasement sensiblement cunéiforme, observées par-devant en coupe transversale, et comportent des arêtes de dissociation (62, 63) s'étendant parallèlement à l'axe du tube d'accumulation, en vue de la dissociation latérale de la circulation de fluide incidente, de sorte que le fluide circule en regard du corps de sonde (49), sans aucune entrée en contact ultérieure, caractérisé par le fait que des indentations en arc de cercle (60, 61) déviant le fluide vers l'extérieur sont ménagées dans les surfaces frontales, à distance - observées en coupe transversale - tant de l'avant du corps de sonde (49) que des délimitations desdites surfaces, situées à l'arrière, indentations dont les arêtes de délimitation situées à l'arrière sont réalisées sous la forme des arêtes de dissociation (62, 63), lesdites indentations (60, 61) s'étendant, au maximum, sur 80 % des régions cunéiformes des surfaces frontales.

3. Capteur de pression différentielle de débit selon la revendication 1 ou 2, caractérisé par le fait que les surfaces frontales (28, 29) décrivent un angle d'attaque d'environ 90°.

4. Capteur de pression différentielle de débit selon l'une des revendications 1 à 3, caractérisé par le fait que les tangentes aux arêtes antérieures de délimitation des indentations (30, 31 ; 60, 61) décrivent un angle de 0° à 60°.

5. Capteur de pression différentielle de débit selon la revendication 4, caractérisé par le fait que les tangentes aux arêtes antérieures de délimitation des indentations (30, 31 ; 60, 61) décrivent un angle de 40° au maximum.

6. Capteur de pression différentielle de débit selon la revendication 5, caractérisé par le fait que les tangentes aux arêtes antérieures de délimitation des indentations (30, 31 ; 60, 61) décrivent un angle de 20° au minimum.

7. Capteur de pression différentielle de débit selon l'une des revendications 1 à 6, caractérisé par le fait que les tangentes aux arêtes postérieures de délimitation (32, 33 ; 62, 63) des indentations (30, 31 ; 60, 61) décrivent un angle de 100° à 180°.

8. Capteur de pression différentielle de débit selon la revendication 7, caractérisé par le fait que les tangentes aux arêtes postérieures de délimitation (32, 33 ; 62, 63) des indentations (30, 31 ; 60, 61) décrivent un angle de 130° au minimum.

9. Capteur de pression différentielle de débit selon la revendication 7 ou 8, caractérisé par le fait que les tangentes aux arêtes postérieures de délimitation (32, 33 ; 62, 63) des indentations (30, 31 ; 60, 61) décrivent un angle de 160° au maximum.

10. Capteur de pression différentielle de débit selon l'une des revendications 1 à 9, caractérisé par le fait que l'angle entre les tangentes aux arêtes postérieures de délimitation (32, 33 ; 62, 63) des indentations (30, 31 ; 60, 61), et des régions respectivement attenantes des surfaces frontales, mesure 20° au minimum.

11. Capteur de pression différentielle de débit selon l'une des revendications 1 à 10, caractérisé par le fait que les indentations (30, 31 ; 60, 61) s'étendent à chaque fois - observées en coupe transversale - sur au moins 60 % des régions cunéiformes des surfaces frontales (28, 29).

12. Capteur de pression différentielle de débit selon l'une des revendications 1 à 11, caractérisé par le fait que le corps (2, 49) présentant l'orifice (16, 50) de la sonde consiste en une région venue de mortaisage ou d'emboutissage.

EP 0 198 197 B1

FIG.1

FIG.2

FIG.3

FIG.4

FIG.5

FIG.6